# EUROPEAN PATENT APPLICATION

(11) **EP 1 658 926 A1**
(43) Date of publication of application: **24.05.2006**
(21) Application number: 05077572.5
(22) Date of filing: 10.11.2005
(51) Int. Cl.: B23P 15/16, B21D 28/16, B21D 53/84, F02M 61/18

(54) **Process for inserting flow passages in a work piece**

(30) Priority: 22.11.2004 US 994693
(71) Applicant: Delphi Technologies, Inc., Troy, MI 48007 (US)
(72) Inventor: Von Bacho III, Paul S., Rochester, NY 14626 (US)
(74) Representative: Denton, Michael John

(57) **Abstract**

A method for fabricating a flow passage in a director plate (30) is presented, comprising placing a director plate (30) and a sacrificial strip (20) immediately adjacent a surface of the director plate in a stamping tool (12,12'). The director plate (30) is clamped to the sacrificial strip (20), and a flow passage is created in the director plate by punching a tool piece (18,18') substantially completely through a predetermined location on the director plate (30). The flow passage in said director plate may comprise a fluid-discharge orifice for a fuel injector. The flow passage may be punched substantially orthogonal to the planar surface of the director plate (30), or, alternatively, oblique to the planar surface of the director plate (30).

## Description

### TECHNICAL FIELD

This invention pertains generally to a manufacturing process and products associated therewith, and more specifically to a process for inserting flow passages in a work piece, e.g. a director plate for a fuel injector.

### INCORPORATION BY REFERENCE

Applicant incorporates by reference US 2005/127209 entitled **DIRECTOR PLATE HAVING SMOOTH EXITS**, in that a description of a director plate having smooth exit holes need not be fully described in detail herein.

### BACKGROUND OF THE INVENTION

Manufacturing of parts for assembly and use in various high-volume components offers challenges to the engineer, including the ability to achieve high levels of precision while minimizing processing steps and tooling costs. An example of a high-volume precision part is a flow director plate of a fuel injector, which includes one or more flow passages to disperse and direct flow of fuel out of the injector.

Engineers design internal combustion engines to meet a variety of requirements, including customer demands for power, fuel economy and durability, and regulations related to emissions. A modem internal combustion engine intended to meet these requirements typically employs a fuel injection system, comprising a plurality of fuel injectors and a fuel delivery system. Each fuel injector delivers a precise quantity of fuel at or near a combustion chamber of the engine, based upon engine operating conditions and operator demands.

A fuel injector typically comprises an electromagnetic device including a solenoid assembly that supplies an actuating force to a fuel-metering valve. The solenoid assembly is operable to open and close the fuel-metering valve in response to a signal sent from an engine controller. A measured amount of fuel is delivered to the internal combustion engine, based upon the amount of time the fuel-metering valve is opened. The fuel injector may include a flow director plate that is placed adjacent to the fuel-metering valve, such that fuel flowing out of the fuel-metering valve passes therethrough. The flow director plate includes one or more flow passages or nozzles that disperse and direct the flow of fuel out of the injector toward an intake valve or combustion chamber. Flow passages assist in preparing the air/fuel mixture by targeting fuel and creating a fuel spray pattern to effectively atomize fuel. An appropriately targeted fuel and fuel spray pattern leads to a properly prepared air/fuel mixture, which assists in meeting increasingly stringent emissions regulations. An exemplary director plate is formed in a shallow cup shape, stamped out of stainless steel sheet stock. The flow passages pass orthogonally or obliquely to a planar surface of the director plate, and are either placed radially or tangentially from a center point of the director plate.

The flow passages through the director plate are typically formed using one of several manufacturing processes. A flow passage may be formed using a rotating drilling operation, by punching a hole with a punch tool, an electric discharge machine (EDM), or laser drilling. Each of these methods typically allows a certain amount of material that is being removed from the director plate to remain at an inlet or an outlet of each flow passage when creating the flow passage. The remaining material may be in the form of deformed rims, burrs, and break-edges.

The aforementioned material remaining on the director plate may be removed by subsequent processing steps, e.g. coining or polishing, magnetorheological finishing, or laser polishing of the outlet and inlet of each flow passage. Failure to effectively and completely remove the material may affect fuel atomization and precise targeting of the fuel and the spray pattern, thus affecting emissions performance. Furthermore, presence of material at the inlet or outlet of each flow passage may lead to a buildup of fuel residue during ongoing operation of the engine. Such buildup may affect precision targeting of the fuel and the spray pattern, again with a potential result of affecting emissions performance. Such buildup may interfere with the injector's ability to deliver a precise quantity of fuel, leading to injector failure and replacement. A director plate with smooth flow passages, i.e. no material at the inlet or outlet of the flow passages, is desirable, in order to meet customer requirements and emissions regulations. Therefore, what is needed is a method to form a smooth flow passage in a flow director plate, without use of additional processing steps.

### SUMMARY OF THE INVENTION

The present invention is an improvement in the existing art by providing a method for fabricating a flow passage in a director plate, comprising placing a director plate and a sacrificial strip immediately adjacent a substantially planar surface of the director plate in a stamping tool. The director plate is clamped to the sacrificial strip, and a flow passage is created in the director plate by punching a tool piece substantially completely through a predetermined location on the director plate. The flow passage in said director plate may comprise a fluid-discharge orifice for a fuel injector.

The present invention is a further improvement in the existing art, in that an entrance shape of the flow passage may be formed, comprising applying a second tool piece to the surface of the director plate at the flow passage, and the director plate is deformed plastically at the flow passage with the second tool piece.

Another aspect of the invention is that the flow passage may be punched substantially orthogonal to the planar surface of the director plate, or, alternatively, oblique to the planar surface of the director plate.

These and other aspects of the invention will become apparent to those skilled in the art upon reading and understanding the following detailed description of the embodiments.

### BRIEF DESCRIPTION OF THE DRAWINGS

The invention may take physical form in certain parts and arrangement of parts, the preferred embodiment of which will be described in detail and illustrated in the accompanying drawings which form a part hereof, and wherein:
Fig. 1 is a representative diagram of an exemplary system for fabricating a flow passage, in accordance with the present invention;
Fig. 2 is a second representative diagram of an exemplary system for fabricating a flow passage, in accordance with the present invention; and,
Fig. 3 is a drawing of an exemplary device with flow passages, in accordance with the present invention.

### DETAILED DESCRIPTION OF AN EMBODIMENT

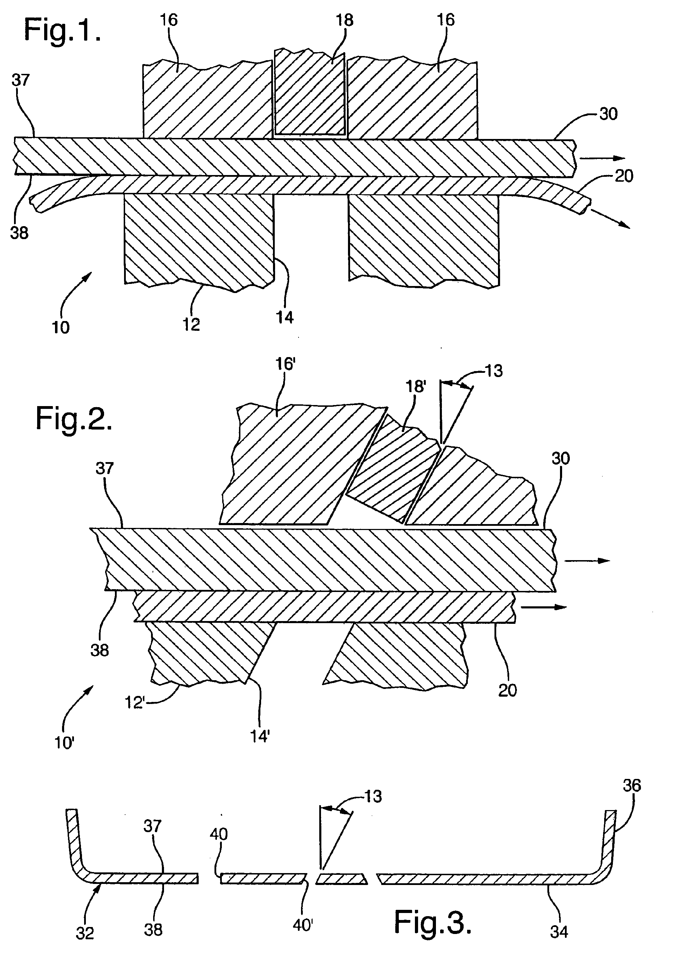

Referring now to the drawings, wherein the showings are for the purpose of illustrating the invention only and not for the purpose of limiting the same, Figs. 1 and 2 show setups of exemplary systems for fabricating a flow passage 40, 40' or nozzle in a flow director plate 32, in accordance with the present invention. In this embodiment, the flow director plate 32 (shown in Fig. 3) is intended for use in a fuel injector (not shown) employed by an internal combustion engine (not shown). Each exemplary system comprises a stamping operation and related punch equipment 10, 10' which are known to one skilled in the art.

The method for fabricating a plurality of flow passages 40, 40' or nozzles in flow director plate 32 comprises concurrently feeding a director plate strip 30 and a sacrificial strip 20 into punch equipment 10, 10'. The director plate strip 30 includes a punch entrance side 37 and a punch exit side 38. The sacrificial strip 20 is placed immediately adjacent the director plate strip 30, preferably on the punch exit side 38. The punch equipment 10, 10' employs a punch guide and clamping device 16, 16' to clamp the director plate strip 30 and the sacrificial strip 20 together. The stamping operation comprises employing the punch equipment 10, 10' to stamp the clamped director plate strip 30 and sacrificial strip 20 with a punch tool piece 18, 18' contained in the punch guide and clamping device 16, 16', thus forming the plurality of flow passages 40, 40' in the director plate strip 30. The stamping operation stamps the plurality of flow passages 40, 40' in the director plate 32 by punching tool piece 18, 18' substantially completely through the substantially planar surface 34 of the director plate strip 30. The director plate 32 is subsequently formed, and is preferably a circular cup-shaped device, comprising a substantially planar surface 34, with upturned material at the outer circumference 36, as shown in Fig. 3.

The stamping equipment 10, 10' includes a stamping die 12, 12' including a die opening 14, 14', punch guide and clamp device 16, 16', and punch tool 18, 18'. Under typical operation, a work piece, in this instance the director plate strip 30 and the sacrificial strip 20 are placed in the stamping equipment 10, 10', with the punch exit side 38 of the director plate strip 30 immediately adjacent the sacrificial strip 20. The punch guide and clamp device 16, 16' clamp, i.e. firmly hold using compressive force, the director plate strip 30 and the sacrificial strip 20 against the stamping die 12, 12'. The effect of the process of clamping the sacrificial strip 20 to the director plate strip 30 is to cause the sacrificial strip 20 to substantially completely mechanically support the portion of the director plate strip 30 wherein the punch tool 18, 18' is applied, and immediately adjacent thereto.

The stamping equipment 10, 10' then punches or forces the punch tool 18, 18' substantially completely through the director plate strip 30 to create the plurality of flow passages 40, 40' in the director plate strip 30. The die opening 14, 14' is designed to be slightly larger size than the punch tool 18, 18', to accommodate the punch tool 18, 18' material from the director plate strip 30 as it is forced through the director plate strip 30 and the sacrificial strip 20. It is necessary that the punch tool 18, 18' pass sufficiently through the director plate strip 30 and the sacrificial strip 20 to form the plurality of flow passages 40, 40', while it is not necessary for the punch tool 18, 18' to pass completely through the sacrificial strip 20. Stamping equipment, including control of stamping force, feeding material into the stamping equipment, control of depth of stamping, and design of punch tools are known to one skilled in the art, and are not described in detail herein.

Referring again to Fig. 3, the director plate 32 in this embodiment is preferably a circular cup-shaped device, comprising the substantially planar surface 34, with material at the outer circumference upturned 36. The plurality of flow passages 40, 40' are placed in various locations on the planar surface 34, according to design and application requirements of the fuel injector in the specific internal combustion engine (not shown). The exemplary director plate 32 is formed from stainless steel sheet stock, such as AISI 430 or 304L steel. The exemplary sheet stock may be within a range of thicknesses varying from 0.150 to 0.300 micrometers. The plurality of flow passages 40, 40' are each ranging from 0.100 to 0.500 micrometers in diameter. Each flow passage 40, 40' may be orthogonal to the planar surface 34, or may be oblique to the planar surface 34, at an angle 13 from a line orthogonal to the planar surface 34, as shown. Determining locations and specific quantity of the flow passages based upon injector specifications is known to one skilled in the art.

Material for the sacrificial strip 20 is selected to provide the optimal amount of mechanical support of the director plate strip 30 in the area of the strip 30 wherein the punch tool 18, 18' is applied, and immediately adjacent thereto, during the punching process. Material selection criteria include material hardness and yield strength relative to the material of the director plate strip 30 material, and must be determined by experimentation to determine a material that provides sufficient support while optimizing tool life of the punch tool 18, 18', among other factors. In this embodiment, when the director plate strip 30 material is AISI 430 or 304L steel, a preferable material for the sacrificial strip 20 is of similar hardness. Alternatively, sacrificial strip 20 material may be of increased hardness to accomplish the task, while still optimizing tool wear.

Clamping of the director plate 30 to the sacrificial strip 20 comprises using the punch guide and clamp device 16, 16' to clamp, i.e. firmly hold, the director plate strip 30 and the sacrificial strip 20 against the stamping die 12, 12' with the die opening 14, 14' in this embodiment. The intent of clamping the director plate strip 30 and the sacrificial strip 20 is to use the sacrificial strip 20 to provide mechanical compressive support to the director plate strip 30. Therefore, when the director plate strip 30 is firmly clamped against the sacrificial strip 20 between the stamping die 12, 12' and the die opening 14, 14', the ability of the punch tool 18, 18' to tear or create burrs in the plurality of flow passages 40, 40' on the punch exit side 38 when the punch tool 18, 18' is forced through the director plate strip 30 is substantially eliminated. This permits creation of a flow passage comprising a smooth bore and smooth entrance and exit openings.

Flow passages are created in the director plate 32 by punching tool piece 18, 18' substantially completely through predetermined locations on the substantially planar surface 34 of the director plate 32, according to predetermined design criteria. As shown in Fig. 1, the punch tool piece 18, is operable to punch the flow passage 40, substantially orthogonal to the planar surface 34 of the director plate 32. Alternatively, as shown in Fig. 2, the punch tool piece 18' is operable to punch the flow passage 40' oblique to the planar surface 34 of the director plate 32.

The punch tool piece 18, 18' is preferably a tubular or cylindrical shaped device with a circular cross-section, and is preferably made of tungsten carbide material or of some other hardened material. Other possible tool pieces include those which are elliptical in cross-section, leading to an elliptically- shaped flow passage 40, 40'. Alternatively, the tool piece may be conical, leading to a flow passage 40, 40' that is conical in shape. Determining tool shape and appropriate punch tool and die material is known to one skilled in the art.

In operation, the punch tool piece 18, 18' punches through the director strip material 30, creating each of the plurality of flow passages by mechanically breaking a portion of material out of the director strip 30.

Furthermore, the sacrificial strip 20 may be employed to provide support to the director strip 30 when a secondary operation is executed on the director strip 30, such as when it is desired to make or to form an entrance shape or exit shape to the flow passage 40, 40'. This may comprise applying a second tool piece to the substantially planar surface of the director plate 32 at the flow passage 40, 40' to plastically deform the director plate 32 at the flow passage, preferably on the punch entrance side 37.

In operation, the sacrificial strip 20 and the director plate strip 30 are concurrently fed into punch equipment 10, 10'. The sacrificial strip 20 may be fed at a slower rate than the director plate strip 30 to conserve material and reduce amount of scrap material created during the operation.

This invention applies to other embodiments of the invention wherein flow passages 40, 40' are formed through a director plate with a non-linear surface (Not shown). In this embodiment, a sacrificial strip is placed immediately adjacent a portion of the non-linear surface of the director plate, and conforms to the non-linear shape. The director plate and the sacrificial strip are clamped, as previously described, and a plurality of flow passages are created by punching a tool piece substantially completely through the non-linear surface of the director plate at the portion of the non-linear surface of the director plate clamped to the sacrificial strip. The non-linear surface of the director plate is preferably formed subsequent to creation of the flow passages.

Although this is described as a method for fabricating a flow passage in a director plate, it is understood that this invention may apply to an alternate embodiment wherein a smooth passage is created in a plate or other structure using a punch device. The invention has been described with specific reference to the preferred embodiments and modifications thereto. Further modifications and alterations may occur to others upon reading and understanding the specification. It is intended to include all such modifications and alterations insofar as they come within the scope of the invention.

## Claims

1. A method for fabricating a flow passage in a director plate, comprising:
providing a director plate comprising a substantially planar surface;
placing a sacrificial strip immediately adjacent the substantially planar surface of the director plate;
clamping the director plate to the sacrificial strip; and,
creating a flow passage in the director plate by punching a tool piece substantially completely through a predetermined location on the substantially planar surface of the director plate.

2. The method of claim 1, further comprising:
forming an entrance shape of the flow passage, comprising:
applying a second tool piece to the substantially planar surface of the director plate at the flow passage, and,
deforming plastically the director plate at the flow passage with the second tool piece.

3. The method of claim 1, further comprising:
forming an exit shape of the flow passage, comprising:
applying a second tool piece to the substantially planar surface of the director plate at the flow passage, and,
plastically deforming the director plate at the flow passage with the second tool piece.

4. The method of claim 1, wherein creating a flow passage in the director plate by punching a tool piece substantially completely through the substantially planar surface of the director plate comprises punching the flow passage substantially orthogonal to the planar surface of the director plate.

5. The method of claim 1, wherein creating a flow passage in the director plate by punching a tool piece substantially completely through the substantially planar surface of the director plate comprises punching the flow passage oblique to the planar surface of the director plate.

6. The method of claim 5, wherein punching the flow passage oblique to the planar surface of the director plate comprises punching the flow passage at an angle measuring approximately nineteen degrees from a line orthogonal to the planar surface.

7. The method of claim 1, wherein the flow passage comprises a fluid-discharge orifice for a fuel injector.

8. The method of claim 1, wherein creating a flow passage in the director plate by punching a tool piece substantially completely through a predetermined location of the director plate comprises breaking a portion of material substantially completely out of the director plate.

9. A method for fabricating a flow passage in a director plate, comprising:
providing a director plate with a non-linear surface;
placing a sacrificial strip immediately adjacent a portion of the non-linear surface of the director plate;
clamping the portion of the non-linear surface of the director plate to the sacrificial strip; and,
creating a flow passage in the director plate by punching a tool piece substantially completely through the non-linear surface of the director plate at the portion of the non-linear surface of the director plate clamped to the sacrificial strip.

10. The method of claim 9, wherein creating a flow passage in the director plate by punching a tool piece substantially completely through the non-linear surface of the director plate at the portion of the non-linear surface of the director plate clamped to the sacrificial strip further comprises creating a substantially completely smooth bore flow passage in the director plate by punching the tool piece substantially completely through the non-linear surface of the director plate at the portion of the non-linear surface of the director plate clamped to the sacrificial strip.
